# EUROPEAN PATENT APPLICATION

(11) **EP 3 968 668 A1**
(43) Date of publication of application: **16.03.2022**
(21) Application number: 19931057.4
(22) Date of filing: 29.05.2019
(51) Int. Cl.: H04W 4/70

(54) **RESOURCE SUBSCRIPTION METHOD, DEVICE AND SERVER, AND COMPUTER STORAGE MEDIUM**

(71) Applicant: GUANGDONG OPPO MOBILE TELECOMMUNICATIONS CORP., LTD., Dongguan, Guangdong 523860 (CN)
(72) Inventor: TANG, Hai, Dongguan, Guangdong 523860 (CN)
(74) Representative: Manitz Finsterwald Patent- und Rechtsanwaltspartnerschaft mbB
(86) International application number: PCT/CN2019/089135
(87) International publication number: WO 2020/237548

(57) **Abstract**

Embodiments of the present application provide a resource subscription method, device and server, and a computer storage medium. The method is applied to a first electronic device, and a communication connection exists between every two of the first electronic device, the server, and a second electronic device. The method comprises: sending a resource subscription request to the server, wherein the resource subscription request is used for indicating a target resource applied for subscription on the server, and further used for indicating a third electronic device that the server is required to notify when the target resource changes, the third electronic device being at least one of the second electronic devices.

## Description

### TECHNICAL FIELD

Embodiments of the application relate to the technical field of resource subscription in the Internet of things, and particularly to a resource subscription method, a device, a server, and a computer storage medium.

### BACKGROUND

With the constant development of an Internet of things technology, the Internet of things and smart home applications have gradually appear in people's lives. A user may subscribe to a news subject of interest in a server of a news provider through a client of an Application (APP), e.g., sports and stars. The server may push a news message to the APP of the user for the user to timely read when there is fresh news about the subject in the server.

With the development of the abovementioned subscription/pushing technology, the technology has gradually been applied more and more to a business processing layer under an APP layer and the field of Device To Device (D2D), in addition to information transmission of Device To Cloud (D2C).

At present, when a user subscribes to a certain resource in a server through an APP, the server may send a message that the resource changes to the subscriber of the resource when the resource in the server changes. That is, through the existing resource subscription method, a subscriber can subscribe a resource for himself/herself only, and there is a certain limitation.

### SUMMARY

In view of this, the embodiments of the application provide a resource subscription method, a device, a server, and a computer storage medium, which can extend the resource subscription range.

The technical solutions of the embodiments of the application may be implemented as follows.

According to a first aspect, an embodiment of the application provides a resource subscription method, which is applied to a first electronic device. Every two of the first electronic device, a server, and a second electronic device are in communication connection. The method includes the following operation.

A resource subscription request is sent to the server.

The resource subscription request is configured to indicate a target resource requested for subscription in the server by the first electronic device, and may further be configured to indicate at least one third electronic device that the first electronic device requires the server to notify when the target resource changes. The at least one third electronic device is at least one electronic device in the second electronic device.

According to a second aspect, an embodiment of the application provides a resource subscription method, which is applied to a server. Every two of the server, a first electronic device, and a second electronic device are in communication connection. The method includes the following operations.

A resource subscription request is received from the first electronic device.

The resource subscription request is configured to indicate a target resource requested for subscription by the first electronic device, and is further configured to indicate at least one third electronic device that the first electronic device requires the server to notify when the target resource changes. The at least one third electronic device is at least one electronic device in the second electronic device.

Subscription to the target resource is performed for the first electronic device and the at least one third electronic device according to the resource subscription request.

According to a third aspect, an embodiment of the application provides a resource subscription method, which is applied to at least one third electronic device. Every two of a first electronic device, a server, and a second electronic device are in communication connection. The at least one third electronic device is at least one electronic device in the second electronic device. The method includes the following operations.

A subscription notification generated by the server and indicating successful subscription to a target resource is received.

The target resource is a resource indicated in a resource subscription request and requested for subscription by the first electronic device. The resource subscription request is a request received by the server from the first electronic device, and is further configured to indicate the at least one third electronic device that the first electronic device requires the server to notify when the target resource changes.

A receiving mechanism for the target resource is established according to the subscription notification indicating successful subscription to the target resource.

The receiving mechanism is configured to receive a message when the target resource changes.

According to a fourth aspect, an embodiment of the application provides an electronic device. Every two of the electronic device, a server, and a second electronic device are in communication connection. The electronic device includes a first sending module.

The first sending module is configured to send a resource subscription request to the server.

The resource subscription request is configured to indicate a target resource requested for subscription in the server by the first electronic device, and is further configured to indicate at least one third electronic device that the first electronic device requires the server to notify when the target resource changes. The at least one third electronic device is at least one electronic device in the second electronic device.

According to a fifth aspect, an embodiment of the application provides a server. Every two of the server, a first electronic device, and a second electronic device are in communication connection. The server includes a second receiving module and a subscription module.

The second receiving module is configured to receive a resource subscription request from the first electronic device.

The resource subscription request is configured to indicate a target resource requested for subscription by the first electronic device, and is further configured to indicate at least one third electronic device that the first electronic device requires the server to notify when the target resource changes. The at least one third electronic device is at least one electronic device in the second electronic device.

The subscription module is configured to perform subscription to the target resource for the first electronic device and the at least one third electronic device according to the resource subscription request.

According to a sixth aspect, an embodiment of the application provides an electronic device. Every two of a server, a first electronic device, and a second electronic device are in communication connection. The electronic device is at least one electronic device in the second electronic device. The electronic device includes a third receiving module and an establishment module.

The third receiving module is configured to receive a subscription notification which is generated by the server and indicates successful subscription to a target resource.

The target resource is a resource indicated in a resource subscription request and requested for subscription by the first electronic device. The resource subscription request is a request received by the server from the first electronic device, and is further configured to indicate the at least one electronic device that the first electronic device requires the server to notify when the target resource changes.

The establishment module is configured to establish a receiving mechanism for the target resource according to the subscription notification indicating successful subscription to the target resource.

The receiving mechanism is configured to receive a message when the target resource changes.

According to a seventh aspect, an embodiment of the application provides an electronic device. Every two of the electronic device, a server, and a second electronic device are in communication connection. The electronic device includes:
a processor and a storage medium storing instructions executable for the processor. The storage medium executes operations dependently on the processor through a communication bus. The instructions are executed by the processor to execute the resource subscription method executed by the first electronic device.

According to an eighth aspect, an embodiment of the application provides a server. Every two of the server, a first electronic device, and a second electronic device are in communication connection. The server includes:
a processor and a storage medium storing instructions executable for the processor. The storage medium executes operations dependently on the processor through a communication bus. The instructions are executed by the processor to execute the resource subscription method executed by the server.

According to a ninth aspect, an embodiment of the application provides an electronic device. Every two of a server, a first electronic device, and a second electronic device are in communication connection. The electronic device is at least one electronic device in the second electronic device. The electronic device includes:
a processor and a storage medium storing instructions executable for the processor. The storage medium executes operations dependently on the processor through a communication bus. The instructions are executed by the processor to execute the resource subscription method executed by the at least one third electronic device.

According to a tenth aspect, an embodiment of the application provides a computer storage medium storing executable instructions, which are executed by one or more processors to enable the one or more processors to execute the resource subscription method executed by the first electronic device, or the server, or the at least one third electronic device.

According to an eleventh aspect, an embodiment of the application provides a chip including a processor, which is configured to call and run a computer program in a memory to enable a device installed with the chip to execute the resource subscription method executed by the first electronic device, or the server, or the at least one third electronic device.

According to a twelfth aspect, an embodiment of the application provides a computer program, which enables a computer to execute the resource subscription method executed by the first electronic device, or the server, or the at least one third electronic device.

According to a thirteenth aspect, an embodiment of the application provides a computer program product including computer program instructions, which enable a computer to execute the resource subscription method executed by the first electronic device, or the server, or the at least one third electronic device.

The embodiments of the application provide a resource subscription method, a device, a server, and a computer storage medium. The method is applied to a first electronic device. Every two of the first electronic device, a server, and a second electronic device are in communication connection. The method includes that a resource subscription request is sent to the server. The resource subscription request is configured to indicate a target resource requested for subscription in the server by the first electronic device, and is further configured to indicate at least one third electronic device that the first electronic device requires the server to notify when the target resource changes. The at least one third electronic device is at least one electronic device in the second electronic device. That is, in the embodiments of the application, the first electronic device subscribes to the target resource for the first electronic device and the at least one third electronic device in the server through the resource subscription request indicating the target resource requested for subscription in the server and the at least one third electronic device that the server is required to notify when the target resource changes. As such, the first electronic device implements subscription to the target resource in the server for both itself and the at least one third electronic device. It can be seen that, through the resource subscription request sent to the server by the first electronic device, the first electronic device can subscribe to the target resource not only for itself but also for more electronic devices. Through the resource subscription method, resource subscription is not limited to one-to-one resource subscription, the realizing range of resource subscription is extended, and a user is helped to use a resource subscription function conveniently and rapidly, thereby improving user experiences.

### BRIEF DESCRIPTION OF THE DRAWINGS

FIG. 1 is an interactive flowchart of conventional resource subscription.
FIG. 2 is a structure diagram of an optional resource subscription system according to an embodiment of the application.
FIG. 3 is an interactive flowchart of an optional resource subscription method according to an embodiment of the application.
FIG. 4 is an interactive flowchart of an example of an optional resource subscription method according to an embodiment of the application.
FIG. 5 is an interactive flowchart of an example of another optional resource subscription method according to an embodiment of the application.
FIG. 6 is a flowchart of an optional resource subscription method according to an embodiment of the application.
FIG. 7 is a flowchart of another optional resource subscription method according to an embodiment of the application.
FIG. 8 is a flowchart of yet another optional resource subscription method according to an embodiment of the application.
FIG. 9 is a structure diagram of an optional first kind of electronic device according to an embodiment of the application.
FIG. 10 is a structure diagram of an optional server according to an embodiment of the application.
FIG. 11 is a structure diagram of an optional second kind of electronic device according to an embodiment of the application.
FIG. 12 is a structure diagram of another optional first kind of electronic device according to an embodiment of the application.
FIG. 13 is a structure diagram of another optional server according to an embodiment of the application.
FIG. 14 is a structure diagram of another optional second kind of electronic device according to an embodiment of the application.

### DETAILED DESCRIPTION

In order to make the characteristics and technical contents of the embodiments of the application understood in more detail, implementation of the embodiments of the application will be described below in combination with the drawings in detail. The appended drawings are only adopted for description as references and not intended to limit the embodiments of the application.

At present, the Internet of things and smart home applications have gradually appear in people's lives. A user may subscribe to a news subject of interest from a news provider through a mobile APP, e.g., sports and stars. A corresponding news message may be pushed to the APP of the user for the user to timely read when there is fresh news about the subject. With the development of the abovementioned subscription/pushing technology, the technology has gradually been applied more and more to a business processing layer under an APP layer and the field of D2D, in addition to information transmission of D2C. For example, a mobile phone subscribes to a temperature of a thermometer at home, and when the temperature of the thermometer is more than or equal to 26 degrees centigrade, an air conditioner is turned on.

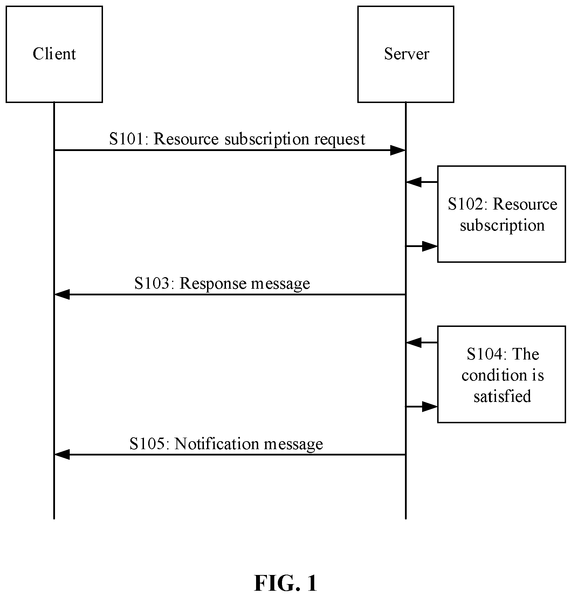

FIG. 1 is an interactive flowchart of conventional resource subscription. As illustrated in FIG. 1, a conventional resource subscription method may include the following operations.

In S101, a client sends a resource subscription request. A type of the request message is Retrieve. Observe index refers to that the request message is a subscription message. The request message includes parameters Fr, To, Ri, Op, and Obs.

Fr denotes an identifier of a device where the client is located.

To denotes an identifier of a resource that the client subscribes to.

Ri denotes a request identifier which is configured to complete binding of a request and a response.

Op denotes an operation type, usually one type of CURD, where C is Create, U is Update, R is Retrieve, and D is Delete.

Obs denotes a subscription identifier.

In S102, after receiving the resource subscription request, a server authenticates the request and establishes a monitoring mechanism, thereby subscribing to a resource for the client.

In S103, the server replies the client with a response message for a purpose of responding to the subscription request message of the client: the subscription message has been received, and the monitoring is started.

In S104, the server generates a notification message when having monitored the message requested by the client changes (equivalent to that a condition is satisfied). The notification message includes the content after the change.

In S105, the server sends the notification message (equivalent to the content after the change) to the client.

Message identifiers Ri of the resource subscription request, the response message, and the notification message are the same.

At this point, a message subscription/notification period is completed. If the subscription to the content needs to be canceled, a request message is sent again. Parameter Obs of the request message is set to the subscription cancellation.

Thus it can be seen that the notification message can be sent to the subscriber of the target resource only, i.e., the message initiator specified by parameter Fr, and subscription to the resource cannot be implemented for another device. A content that a subscriber subscribes to needs to be notified to the subscriber and another device besides the subscriber in many scenes in the field of Internet of things/smart home. For example, a mobile phone subscribes to alert information of a refrigerator, and the alert information needs to be pushed to all devices, which have screens, of a user when generated by the refrigerator. When the abovementioned solution is adopted for this scene, each device needs to subscribe to the alert information of the refrigerator.

In order to extend a resource subscription range, an embodiment of the application provides a resource subscription method, which is applied to a resource subscription system.

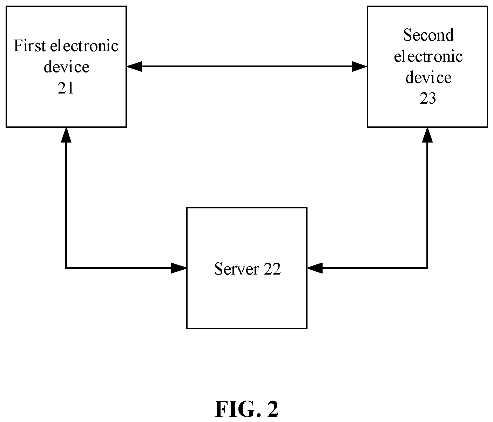

FIG. 2 is a structure diagram of an optional resource subscription system according to an embodiment of the application. As illustrated in FIG. 2, the resource subscription system may include a first electronic device 21, a server 22, and a second electronic device 23. A communication connection is established between every two of the first electronic device 21, the server 22, and the second electronic device 23.

It is to be noted here that the communication connections may be established between the first electronic device 21, the server 22, and the second electronic device 23 through a wireless local area network, e.g., smart home devices in the same Wireless Fidelity (WIFI).

For example, the first electronic device 21 is a mobile phone of a user, the server 22 is a refrigerator, and the second electronic devices 23 are a mobile phone of another user and a television. The first electronic device 21 is a subscriber, the server 22 is a subscription provider, and an electronic device in the second electronic device may be a notification receiver.

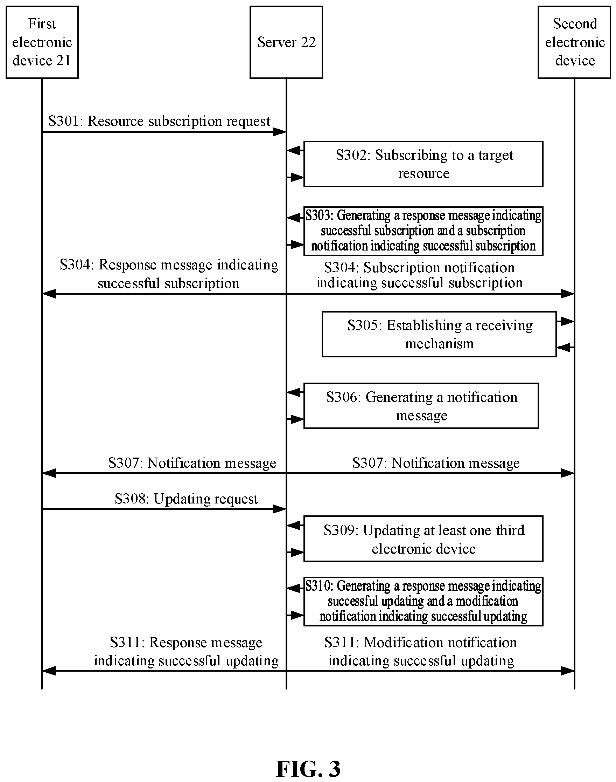

FIG. 3 is an interactive flowchart of an optional resource subscription method according to an embodiment of the application. Referring to FIG. 3, the method is applied to the abovementioned resource subscription system. The resource subscription system may include a first electronic device 21, a server 22, and a second electronic device 23. A communication connection is established between every two of the first electronic device 21, the server 22, and the second electronic device 23. The resource subscription method may include the following operations.

In S301, the first electronic device 21 sends a resource subscription request to the server 22.

The resource subscription request is configured to indicate a target resource requested for subscription in the server 22, and is further configured to indicate at least one third electronic device that the server 22 is required to notify when the target resource changes. The at least one third electronic device is at least one electronic device in the second electronic device 23.

Specifically, the operation in S301 may be implemented through the following two manners here.

A first manner: the first electronic device 21 sends the resource subscription request to the server 22. The resource subscription request includes parameters Fr, To, Ri, Op, Obs, and Nt. Fr denotes an identifier of the first electronic device 21, and is configured to identify a subscriber of resource subscription. To denotes an identifier of the target resource requested for subscription, and is configured to identify the subscribed target resource. Ri denotes a specific message identifier, and is configured to distinguish a message. Op denotes an operation type of Retrieve. Obs denotes a subscription identifier. Nt denotes an identifier of a target resource notification receiver, i.e., an identifier of an electronic device that the subscriber of resource subscription requires the server 22 to notify. As such, the resource subscription request indicates the target resource and the target resource notification receiver, to implement subscription to the target resource.

A second manner: the first electronic device 21 sends a subscription message to the server 22 at first. The message includes parameters Fr, To, Ri, Op, and Obs. Fr denotes an identifier of the first electronic device 21, and is configured to identify a subscriber of resource subscription. To denotes an identifier of the target resource requested for subscription, and is configured to identify the target resource requested for subscription. Ri denotes a specific message identifier, and is configured to distinguish a message. Op denotes an operation type of Retrieve. Obs denotes a subscription identifier. As such, the first electronic device 21 subscribes to the target resource for itself. Then, the first electronic device 21 continues to send the resource subscription request to the server 22 based on this. The resource subscription request includes parameters Fr, To, Ri, Op, Obs, and Nt. Fr denotes the identifier of the first electronic device 21, and is configured to identify the subscriber of resource subscription. To denotes a monitoring resource identifier of the at least one third electronic device. Ri denotes a specific message identifier, and is configured to distinguish a message. Op denotes an operation type of Update. Obs denotes the subscription identifier. Nt denotes an identifier of a target resource notification receiver, i.e., an identifier of an electronic device that the subscriber of resource subscription requires the server 22 to notify. As such, the resource subscription request indicates the target resource and the target resource notification receiver, to implement subscription to the target resource for the at least one third electronic device.

In some embodiments, the resource subscription request may further carry a subscription period, which is configured to set a subscription time period. Here, no specific limits are made in the embodiment of the application.

In S302, the server 22 subscribes to a target resource for the first electronic device 21 and at least one third electronic device according to the resource subscription request.

After receiving the resource subscription request, the server 22 may subscribe to the target resource for the first electronic device 21 and the at least one third electronic device according to the resource subscription request since the resource subscription request carries parameters Fr, To, Ri, Op, Obs, and Nt.

In order to enable the server 22 to implement the subscription to the target resource, in an optional embodiment, the operation in S302 may include the following operation.

The target resource, the first electronic device 21, and the at least one third electronic device are stored in a created monitoring resource, and the target resource is monitored to subscribe to the target resource for the first electronic device 21 and the at least one third electronic device.

The server 22 may pre-create the monitoring resource, e.g., oic.r.subscriber, which is configured to store parameters Fr, To, Ri, Op, Obs, and Nt carried in the resource subscription request. The resource may be configured to store the parameters, so that the server 22 may monitor the target resource to complete subscribing to the target resource for the first electronic device 21 and the at least one third electronic device.

It is to be noted that oic.r.subscriber is open to the public as a monitoring resource, that is, the first electronic device 21 may discover and directly access oic.r.subscriber.

In the embodiment of the application, the server 22 may adopt another monitoring resource in the server 22 to store the subscriber, target resource, subscription period, target resource notification receiver, etc., which are carried in the resource subscription request. A message notification receiver may be additionally stored based on a conventional art. Here, no specific limits are made thereto in the embodiment of the application.

In S303, the server 22 generates a response message indicating successful subscription to the target resource and a subscription notification indicating successful subscription to the target resource.

The server 22 needs to notify the first electronic device 21 and the at least one third electronic device of an event that the subscription to the target resource is completed after completing the subscription to the target resource in S302. Here, after completing the subscription, the server generates the response message indicating successful subscription to the target resource for the first electronic device 21. For the at least one third electronic device, since the at least one third electronic device is not a subscriber of present resource subscription, the server 22 generates the subscription notification indicating successful subscription to the target resource, to notify the at least one third electronic device that the first electronic device 21 successfully subscribes to the target resource for the at least one third electronic device in the server 22.

In S304, the server 22 sends the response message indicating successful subscription to the target resource to the first electronic device 21, and sends the subscription notification to the at least one third electronic device.

Here, the response message indicating successful subscription to the target resource is sent to the first electronic device 21, so that the first electronic device 21 learns that the server 22 has received the resource subscription request and completed present subscription to the target resource. The subscription notification indicating successful subscription to the target resource is sent to the at least one third electronic device, so that the at least one third electronic device learns that the first electronic device 21 has successfully subscribed to the target resource 22 for it in the server. As such, the first electronic device 21 and the at least one third electronic device learn that the first electronic device 21 has successfully subscribed to the target resource in the server 22.

In S305, the at least one third electronic device receives the subscription notification which is generated by the server 22 and indicates successful subscription to the target resource, and establishes a receiving mechanism for the target resource according to the subscription notification indicating successful subscription to the target resource.

The receiving mechanism is configured to receive a message when the target resource changes.

The at least one third electronic device learns about an event that the first electronic device 21 subscribes to the target resource for it after receiving the subscription notification indicating successful subscription to the target resource. In order to better receive the target resource that the first electronic device 21 subscribes to, in an optional embodiment, the operation in S305 may include the following operation.

The at least one third electronic device stores the target resource, server 22, and first electronic device 21, which are carried in the subscription notification indicating successful subscription to the target resource, in a created monitoring resource, to establish the receiving mechanism for the target resource.

It is to be noted here that, when a receiving mechanism is established for each third electronic device, the third electronic device may further be stored in the created monitoring resource together with the target resource, the server 22, and the first electronic device 21, to establish the receiving mechanism for the target resource.

That is, since the subscription notification carries the target resource requested for subscription, the subscription provider of the target resource, i.e., the server 22, the subscriber of the target resource, i.e., the first electronic device 21, and the target resource notification receiver, i.e., the at least one third electronic device, the at least one third electronic device stores all the information in the created monitoring resource after receiving the subscription notification indicating successful subscription to the target resource. The monitoring resource may be oic.r.subscriber.

The at least one third electronic device completes establishing the receiving mechanism for the target resource after storing the target resource requested for subscription, the subscription provider of the target resource, the subscriber of the target resource, and the target resource notification receiver, i.e., the at least one third electronic device, in oic.r.subscriber.

At this point, the first electronic device 21 completes successfully subscribing to the target resource in the server 22 for itself and the at least one third electronic device.

The server 22 may notify the first electronic device 21 and the at least one third electronic device of a message that the target resource changes after successfully subscribing to the target resource.

In S306, when the target resource changes, the server 22 generates a notification message that the target resource changes.

In S307, the server 22 sends the notification message to the first electronic device 21 and the at least one third electronic device.

After the subscription to the target resource is completed through S301 to S305, the server 22 monitors the target resource in a message notification stage. The server 22 generates the notification message to notify the first electronic device 21 and the at least one third electronic device when the target resource changes.

After the message notification stage, in order to enable the server 22 to send the notification message to the at least one third electronic device with the subscription requirement to the target resource, in an optional embodiment, the method, after the operation in S307, may further include the following operations.

The server 22 counts the number of times that the notification message has been sent and the number of times that a response message indicating successful reception of the notification message is received from each electronic device in the at least one third electronic device.

The server 22 calculates a difference value between the number of times that the notification message has been sent and the number of times received from each electronic device in the at least one third electronic device that the notification message is successfully received.

The server 22 determines an electronic device corresponding to a difference value greater than or equal to a preset threshold as an electronic device specified to be modified, deletes information of the electronic device specified to be modified from information of the at least one third electronic device, and notifies the electronic device specified to be modified to cancel subscription to the target resource.

The information of the at least one third electronic device includes an identifier of the at least one third electronic device. The information of the electronic device specified to be modified includes an identifier of the electronic device specified to be modified.

That is, the server 22 needs to send the notification message to the first electronic device 21 and the at least one third electronic device after completing subscription. However, the server 22 calculates the difference value between the number of times that the notification message has been sent and the number of times received from each electronic device in the at least one third electronic device that the notification message is successfully received. If the difference value is greater than or equal to the preset threshold (the third electronic device may be offline, or may not reply with a response message indicating successful reception because of a failure), the server 22 may delete an identifier of the electronic device corresponding to the difference value from the identifier of the at least one third electronic device, and send a subscription cancellation notification to the electronic device specified to be modified.

At this point, the subscription provider, i.e., the server 22, completes sending the notification message to the subscriber, i.e., the first electronic device 21, and the notification receiver, i.e., the at least one third electronic device.

In S308, the first electronic device 21 sends an updating request for information of the at least one third electronic device to the server 22, or the at least one third electronic device sends an updating request for information of the at least one third electronic device to the server.

The updating request carries information of updated at least one third electronic device.

Here, the information of the updated at least one third electronic device includes an identifier of the updated at least one third electronic device. The identifier of the message notification receiver, i.e., the at least one third electronic device, may further be updated after resource subscription is completed. The updating may be initiated by the first electronic device 21, or may be initiated by the at least one third electronic device. Here, no specific limits thereto in the embodiment of the application.

In practical applications, the updating request may be configured to increase the number of the identifier of the at least one third electronic device or decrease the number of the identifier of the at least one third electronic device. Here, no specific limits are made thereto in the embodiment of the application.

In an optional embodiment, the updating request is configured for the server to add information of at least one fourth electronic device to the information of the at least one third electronic device to obtain the information of the updated at least one third electronic device. The at least one fourth electronic device is at least one electronic device in the second electronic device. The information of the at least one fourth electronic device includes an identifier of the at least one fourth electronic device.

And/or, the updating request is configured for the server to delete information of a fifth electronic device from the information of the at least one third electronic device to obtain the information of the updated at least one third electronic device. The information of the fifth electronic device includes an identifier of the fifth electronic device.

In S309, the server 22 updates the information of the at least one third electronic device according to the information of the updated at least one third electronic device.

In an optional embodiment, the operation that the server 22 updates the information of the at least one third electronic device according to the information of the updated electronic device includes the following operations.

The information of the at least one fourth electronic device is added to the information of the at least one third electronic device to obtain the information of the updated at least one third electronic device, the at least one fourth electronic device being at least one electronic device in the second electronic device.

And/or, the information of the fifth electronic device is deleted from the information of the at least one third electronic device to obtain the information of the updated at least one third electronic device.

Specifically, if the updating request received by the server 22 carries identifiers of devices A, B, C, D, and E, and the identifier of the at least one third electronic device only includes A, B, C, and D, the updating request is configured to add the identifier of device E to parameter Nt. If the updating request received by the server 22 contains the identifiers of A, B, C, and D, and the identifier of the at least one third electronic device includes A, B, C, D, and E, the updating request is configured to delete the identifier of device E from parameter Nt.

In S310, the server 22 generates a response message indicating successful updating for the updating request and a modification notification indicating successful updating for the updating request.

The modification notification is configured to notify whether a modified electronic device between the updated at least one third electronic device and the at least one third electronic device subscribes to the target resource.

In S311, the server 22 sends the response message indicating successful updating for the updating request to the first electronic device 21, and sends the modification notification to a modified electronic device between the updated at least one third electronic device and the at least one third electronic device.

After completing modifying an identifier set of the at least one third electronic device, the server 22 generates the response message indicating successful updating for the updating request for the first electronic device 21, generates the modification notification indicating successful updating for the updating request for the modified electronic device between the updated at least one third electronic device and the at least one third electronic device. The server 22 sends the response message indicating successful updating for the updating request to the first electronic device 21, to let the first electronic device 21 know that the identifier set of the at least one third electronic device has been modified, and sends the modification notification indicating successful updating for the updating request to the modified electronic device between the updated at least one third electronic device and the at least one third electronic device, to let the modified electronic device between the updated at least one third electronic device and the at least one third electronic device know that the modified electronic device has subscribed to the target resource or cancelled the subscription to the target resource.

In order to let the at least one third electronic device know in advance that the first electronic device 21 subscribes to the target resource in the server 22 for the at least one third electronic device, in an optional embodiment, the method, before the operation in S301, may further include the following operation.

The first electronic device 21 sends a subscription planning notification to the at least one third electronic device.

The subscription planning notification is configured to make a notification of starting subscribing to the target resource for the at least one third electronic device.

That is, the first electronic device 21 sends the subscription planning notification to the message notification receiver, i.e., the at least one third electronic device, before subscribing to the target resource. The at least one third electronic device knows through the subscription planning notification that the first electronic device starts subscribing to the target resource for the at least one third electronic device.

It is to be noted that, in the resource subscription method, a client in the first electronic device may subscribe to a resource in the server, sends a message and receives a message from the server. Similarly, in the resource subscription method, a client in the at least one third electronic device may send a message and receive a message from the server.

In practical applications, the first electronic device 21 may also send a message to the at least one third electronic device before the operation in S301. The message is configured to notify the at least one third electronic device that the first electronic device 21 is about to subscribing to the target resource from the server, to notify the at least one third electronic device to make a request of subscribing to the target resource from the server.

The resource subscription method as described in one or more abovementioned embodiments will be described below with an example.

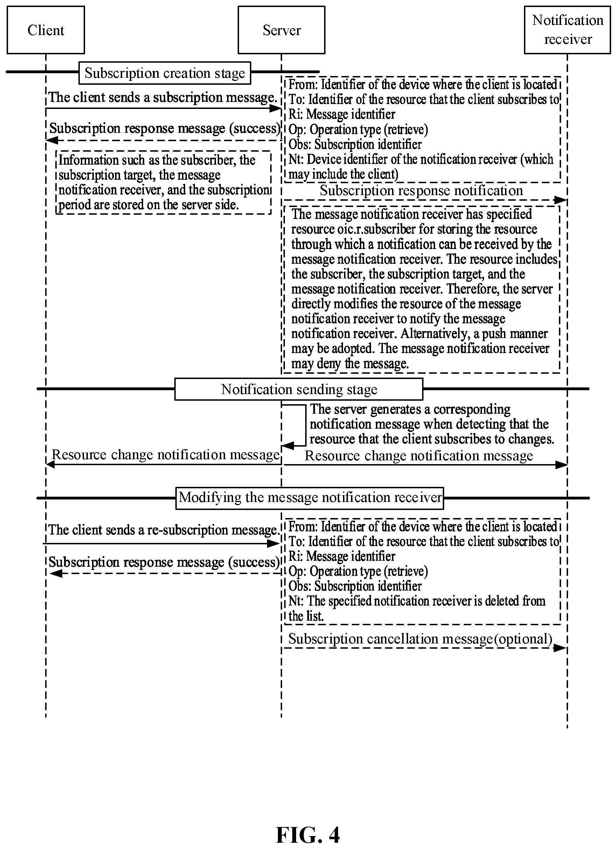

FIG. 4 is an interactive flowchart of an example of an optional resource subscription method according to an embodiment of the application. As illustrated in FIG. 4, the resource subscription method may include the following operations.

In a subscription creation stage, a client sends a resource subscription request to a server at first. The request includes the following parameters: Fr, To, Ri, Op, Obs, and Nt.

Fr denotes an identifier of a device where the client is located.

To denotes an identifier of a resource that the client subscribes to.

Ri denotes a request identifier configured to complete binding of a request and a response.

Op denotes an operation type, usually one of CURD

Obs denotes a subscription identifier.

Nt denotes a list of devices that a notification message is to be sent to (including device identifiers of all message notification receivers specified by the client).

Then, the server, after receiving the resource subscription request and succeeding in authentication, establishes a mechanism for monitoring a target resource and creates a monitoring resource, which is usually used to store information such as a subscriber (equivalent to the abovementioned first electronic device), a subscription target resource (equivalent to the abovementioned target resource), a message notification receiver (equivalent to the abovementioned at least one third electronic device), and a subscription period. The information may be stored a newly created resource oic.r.subscriber. The resource may be configured to store the abovementioned subscription information. oic.r.subscriber is a monitoring resource open to the public per se, that is, the client may discover and directly access oic.r.subscriber. It also includes the following parameters: the subscriber, the subscription target resource, the message notification receiver, and the subscription period.

It is to be noted that the server stores the subscriber, the subscription target resource, and the subscription period in the conventional art, and the message notification receiver may be additionally stored based on the conventional art. However, resource oic.r.subscriber may be added in the Nt device, so that the resource may also be stored in the server for the server to use for maintaining and subscribing to resources.

Finally, the server sends a subscription response notification (equivalent to the abovementioned subscription notification) to the device in the Nt device list, to notify the Nt device that the server may send a notification message to the Nt device. Through the subscription response notification, the at least one third electronic device can directly modify resource oic.r.subscriber stored in the Nt device.

Fr denotes an identifier of a device where the server is located.

To denotes resource oic.r.subscriber in the Nt device (the Nt device has to keep resource oic.r.subscriber, while the server optionally keep resource oic.r.subscriber).

Ri may be the same as Ri in the resource subscription stage. If Ri is consistent, Ri of a notification message sent by the server when the resource involved in the subscription changes is the same. If Ri is not consistent, Ri of notification messages sent to the client and Ri of notification messages sent to the Nt device may be different. That is, the server generates only one notification message if Ri is consistent, and needs to generate notification messages for the subscriber and the message notification receiver respectively if Ri is not consistent.

Op denotes an operation type Update.

Cn denotes the content in oic.r.subscriber: an identifier of the message subscriber, an identifier of the subscription target resource, and the message notification receiver (the identifiers of the Nt devices). It is to be noted that the Nt devices are not all Nt devices but only limited to the Nt devices that receive the abovementioned request.

The Nt device may usually accept the notification message, but may sometimes deny the notification message. If the notification message is denied, the server may correspondingly modify the stored resource, namely deleting the identifier of the Nt device from the Nt list.

In a message notification stage, the server, when having monitored that the target resource that the server subscribes to changes, generates a notification message. The conventional art is adopted for a message for notifying the subscriber (Ri is consistent). A content of a notification message for notifying the Nt device is the same as that for notifying the subscriber.

In a stage of modifying the message notification receiver, the client may initiate a request for modifying the subscription message notification receiver (equivalent to the abovementioned modification request). The request carrries the following parameters: Fr, To, Ri, Op, Obs, and Nt.

Fr denotes an identifier of a device where the client is located.

To denotes an identifier of a resource that the client subscribes to.

Ri denotes a request identifier configured to complete binding of a request and a response.

Op denotes an operation type, usually one of CURD. Here, it is R.

Obs denotes a subscription identifier.

Nt denotes a list of devices that a notification message is to be sent to (including device identifiers of all message notification receivers specified by the client). The latest notification list is stored in the list.

Fr, To, OP, and Obs are the same as the parameter contents in the resource subscription stage.

After receiving the request, the server performs authentication for the request, and modifies the message notification receiver parameter in the monitoring resource (oic.r.subscriber) maintained in the server.

Optionally, the server may also notify a canceled device that no more notification message about the subscription target will be sent.

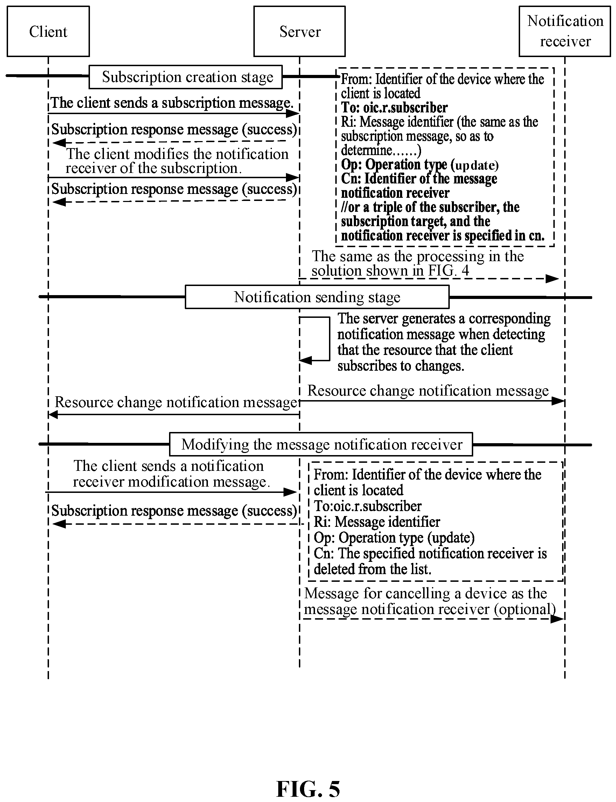

FIG. 5 is an interactive flowchart of an example of another optional resource subscription method according to an embodiment of the application. As illustrated in FIG. 5, the resource subscription method may include the following operations.

In a subscription creation stage, a client sends a subscription message (equivalent to the abovementioned resource subscription request) to a server. Like the conventional art, the sent subscription message specifically contains Fr, To, Ri, Op, and Obs.

Fr denotes an identifier of a device where the client is located.

To denotes an identifier of a resource that the client subscribes to.

Ri denotes a request identifier configured to complete binding of a request and a response. Ri of the message may (optionally) be the same as Ri in the resource subscription stage in the resource subscription solution illustrated in FIG. 4. Therefore, modification of a record in oic.r.subscriber may be determined.

Op denotes an operation type, usually one of CURD. Here, it is R (Retrieve).

Obs denotes a subscription identifier.

Unlike the resource subscription solution illustrated in FIG. 4, the message does not carry parameter Nt. A subscription response message for the message is sent to the client only.

In order to implement subscription to a target resource for a notification receiver, the client sends a request for modifying the subscription notification receiver based on the conventional art. The request for modifying the subscription notification receiver includes the following parameters: Fr, To, Ri, Op, Obs, and Cn.

Fr denotes an identifier of a device where the client is located.

To denotes a monitoring resource identifier oir.r.subscriber.

Ri denotes a request identifier configured to complete binding of a request and a response. Ri of the message may (optionally) be the same as Ri in the resource subscription stage in the resource subscription solution illustrated in FIG. 4. Therefore, modification of a record in oic.r.subscriber may be determined.

Op denotes an operation type, usually one of CURD. Here, it is U (Update).

Obs denotes a subscription identifier.

Cn is a resource that bears the content needs to be stored in oir.r.subscriber: a subscriber, a subscription target resource, a message notification receiver, and a subscription period.

It can be seen from FIG. 5 that the difference from an existing subscription message is that the carried parameters change, as illustrated by the bold part in FIG. 5.

After receiving the request for modifying the subscription notification receiver, the server may execute a modification operation on the subscription notification receiver after authentication, and send a modification notification for the subscription notification receiver to a device that needs to send a notification message. The modification request for the subscription notification receiver is the same as that in the solution illustrated in FIG. 4. However, parameter Ri in the solution illustrated in FIG. 4 may be different from Ri in the solution illustrated in FIG. 5. The subscription notification receiver modification request may be denied as above. The server needs to delete a corresponding device from the message notification receiver parameter in the monitoring resource (oir.r.subscriber) maintained in the server if the request is not denied.

In a message notification stage, a notification message may be sent to the subscriber and the message notification receiver when the subscription target resource in the server changes.

In a stage of modifying the message notification receiver, the client side may send a message for modifying the notification receiver to the server. The message carries the following parameters: Fr, To, Ri, Op, Obs, and Cn.

Fr denotes an identifier of a device where the client is located.

To denotes a monitoring resource identifier oir.r.subscriber.

Ri denotes a request identifier configured to complete binding of a request and a response.

Op denotes an operation type, usually one of CURD. Here, it is U (Update).

Obs denotes a subscription identifier.

Cn is a resource that bears the content that needs to be stored in modified oir.r.subscriber: the subscriber, the subscription target resource, the message notification receiver, and the subscription period. It is actually a record, which may be positioned by Fr and To, in corresponding resource oir.r.subscriber.

It is to be noted that the server may send a notification of canceling pushing of a notification message (equivalent to the abovementioned modification notification) to the Nt device according to the message for modifying the notification receiver. The notification may also modify resource oir.r.subscriber stored in the Nt device, thereby completing the cancellation of the notification message. The server will not send any notification message about the subscription target resource to the device even though the device canceled to be notified does not correctly respond to the message.

In addition, the client may also respectively notify the planned message notification receivers, to subscribe to the message respectively before initiating the resource subscription request message.

In practical applications, the request message for modifying the message notification receiver may be initiated by the client, or may be initiated by the server. The server, if finding that an Nt device does not respond to the notification message continuously for N times, may determine that the Nt device is offline or cannot respond to the notification message for other reasons. In such case, the server stops sending the notification message to the Nt device. Alternatively, a message may be initiated by the Nt device. The Nt device may initiate the request of canceling message pushing when not want to receive the notification message. Resource oic.r.subscriber kept in the server needs to be modified no matter who initiates the message.

Through the abovementioned examples, when the subscription target resource changes, not only the subscriber may receive the notification message about a message change, but also other message notification receivers may receive the same message.

The embodiment of the application provides a resource subscription method, which is applied to a first electronic device. Every two of the first electronic device, a server, and a second electronic device are in communication connection. The method includes that a resource subscription request is sent to the server. The resource subscription request is configured to indicate a target resource requested for subscription in the server, and is further configured to indicate at least one third electronic device that the server is required to notify when the target resource changes. The at least one third electronic device is at least one electronic device in the second electronic device. That is, in the embodiments of the application, the first electronic device subscribes to the target resource for the first electronic device and the at least one third electronic device in the server through the resource subscription request indicating the target resource requested for subscription in the server by the first electronic device and the at least one third electronic device that the first electronic device requires the server to notify when the target resource changes. As such, the first electronic device implements subscription to the target resource in the server for both itself and the at least one third electronic device. It can be seen that, through the resource subscription request sent to the server by the first electronic device, the first electronic device may subscribe to the target resource not only for itself but also for more electronic devices. Through the resource subscription method, resource subscription is not limited to one-to-one resource subscription, the realizing range of resource subscription is extended, and a user is helped to use a resource subscription function conveniently and rapidly, thereby improving user experiences.

The abovementioned resource subscription method will be described below from respective device sides deployed in the resource subscription system.

The resource subscription method is described first from the first electronic device side.

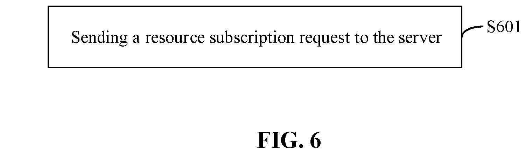

An embodiment of the application provides a resource subscription method, which is applied to a first electronic device. Every two of the first electronic device, a server and a second electronic device are in communication connection. FIG. 6 is a flowchart of an optional resource subscription method according to an embodiment of the application. As illustrated in FIG. 6, the resource subscription method may include the following operations.

In S601, a resource subscription request is sent to the server.

The resource subscription request is configured to indicate a target resource requested for subscription in the server, and is further configured to indicate at least one third electronic device that the server is required to notify when the target resource changes. The at least one third electronic device is at least one electronic device in the second electronic device.

In an optional implementation mode, the method, after the operation in S601, may further include the following operation.

A response message indicating successful subscription to the target resource is received from the server.

In an optional embodiment, when the target resource changes, the method further includes the following operation.

A notification message about the target resource is received from the server,

The notification message is a message generated by the server when the target resource changes.

In an optional embodiment, after the operation that a response message indicating successful subscription to the target resource is received from the server, the method may include the following operations.

An updating request for information of the at least one third electronic device is sent to the server. The information of the at least one third electronic device includes an identifier of the at least one third electronic device. The updating request carries information of updated at least one third electronic device. The information of the updated at least one third electronic device includes an identifier of the updated at least one third electronic device.

A response message indicating successful updating for the updating request is received from the server.

The updating request is configured for the server to add information of at least one fourth electronic device to the information of the at least one third electronic device, to obtain the information of the updated at least one third electronic device. The at least one fourth electronic device is at least one electronic device in the second electronic device. The information of the at least one fourth electronic device includes an identifier of the at least one fourth electronic device.

And/or, the updating request is configured for the server to delete information of a fifth electronic device from the information of the at least one third electronic device, to obtain the information of the updated at least one third electronic device. The information of the fifth electronic device includes an identifier of the fifth electronic device.

The resource subscription method is described then from the server side.

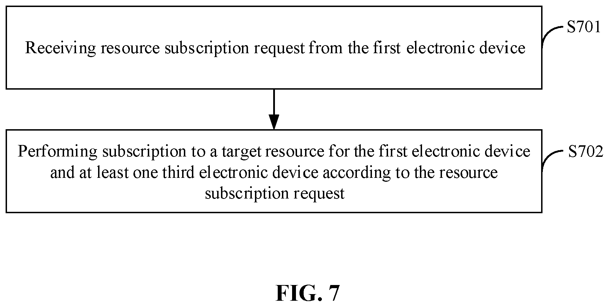

An embodiment of the application provides a resource subscription method, which is applied to a server. Every two of the server, a first electronic device, and a second electronic device are in communication connection. FIG. 7 is a flowchart of another optional resource subscription method according to an embodiment of the application. As illustrated in FIG. 7, the resource subscription method may include the following operations.

In S701, a resource subscription request is received from the first electronic device.

The resource subscription request is configured to indicate a target resource requested for subscription by the first electronic device, and is further configured to indicate at least one third electronic device required by the first electronic device to be notified when the target resource changes. The at least one third electronic device is at least one electronic device in the second electronic device.

In S702, subscription to a target resource is performed for the first electronic device and at least one third electronic device according to the resource subscription request.

In an optional implementation mode, the method, after the operation in S702, may further include the following operation.

A response message indicating successful subscription to the target resource and a subscription notification indicating successful subscription to the target resource are generated, the response message indicating successful subscription to the target resource is sent to the first electronic device, and the subscription notification is sent to the at least one third electronic device.

In an optional embodiment, after the operation that a response message indicating successful subscription to the target resource and a subscription notification indicating successful subscription to the target resource are generated, the response message indicating successful subscription to the target resource is sent to the first electronic device, and the subscription notification is sent to the at least one third electronic device, the method may further include the following operation.

When the target resource changes, a notification message that the target resource changes is generated, and the notification message is sent to the first electronic device and the at least one third electronic device.

In an optional embodiment, after the operation that a response message indicating successful subscription to the target resource and a subscription notification indicating successful subscription to the target resource are generated, the response message indicating successful subscription to the target resource is sent to the first electronic device, and the subscription notification is sent to the at least one third electronic device, the method may further include the following operations.

An updating request for information of the at least one third electronic device is received. The information of the at least one third electronic device includes an identifier of the at least one third electronic device. The updating request carries information of updated at least one third electronic device. The information of the updated at least one third electronic device includes an identifier of the updated at least one third electronic device.

The information of the at least one third electronic device is updated according to the information of the updated at least one third electronic device.

A response message indicating successful updating for the updating request and a modification notification indicating successful updating for the updating request are generated, the response message indicating successful updating for the updating request is sent to the first electronic device, and the modification notification is sent to a modified electronic device between the updated at least one third electronic device and the at least one third electronic device.

The modification notification is configured to notify whether a modified electronic device between the updated at least one third electronic device and the at least one third electronic device subscribes to the target resource.

In an optional embodiment, the operation that the information of the at least one third electronic device is updated according to the information of the updated at least one third electronic device may include the following operations.

Information of at least one fourth electronic device is added to the information of the at least one third electronic device, to obtain the information of the updated at least one third electronic device. The at least one fourth electronic device is at least one electronic device in the second electronic device. The information of the at least one fourth electronic device includes an identifier of the at least one fourth electronic device.

And/or, information of a fifth electronic device is deleted from the information of the at least one third electronic device to obtain the information of the updated at least one third electronic device. The information of the fifth electronic device includes an identifier of the fifth electronic device.

In an optional embodiment, the operation in S702 may include the following operation.

The target resource, the first electronic device, and the at least one third electronic device are stored in a created monitoring resource, and the target resource is monitored to subscribe to the target resource for the first electronic device and the at least one third electronic device.

In an optional embodiment, after the operation that a notification message that the target resource changes is generated and the notification message is sent to the first electronic device and the at least one third electronic device when the target resource changes, the method further includes the following operations.

The number of times that the notification message has been sent and the number of times that a response message indicating successful reception of the notification message is received from each electronic device in the at least one third electronic device are counted.

A difference value between the number of times that the notification message has been sent and the number of times received from each electronic device in the at least one third electronic device that the notification message is successfully received is calculated.

An electronic device corresponding to a difference value greater than or equal to a preset threshold is determined as an electronic device specified to be modified, information of the electronic device specified to be modified is deleted from information of the at least one third electronic device, and the electronic device specified to be modified is notified to cancel subscription to the target resource. The information of the at least one third electronic device includes an identifier of the at least one third electronic device. The information of the electronic device specified to be modified includes an identifier of the electronic device specified to be modified.

The resource subscription method is described next from the at least one third electronic device side.

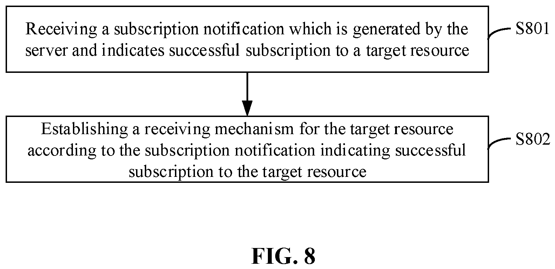

An embodiment of the application provides a resource subscription method, which is applied to at least one third electronic device. Every two of a first electronic device, a server, and a second electronic device are in communication connection. The at least one third electronic device is at least one electronic device in the second electronic device. FIG. 8 is a flowchart of yet another optional resource subscription method according to an embodiment of the application. As illustrated in FIG. 8, the resource subscription method may include the following operations.

In S801, a subscription notification generated by the server and indicating successful subscription to a target resource is received.

The target resource is a resource indicated in a resource subscription request and requested for subscription in the server by the first electronic device. The resource subscription request is a request received by the server from the first electronic device, and is further configured to indicate the at least one third electronic device that the first electronic device requires the server to notify when the target resource changes.

In S802, a receiving mechanism for the target resource is established according to the subscription notification indicating successful subscription to the target resource.

The receiving mechanism is configured to receive a message when the target resource changes.

In an optional embodiment, when the target resource changes, the method further includes the following operation.

A notification message about the target resource is received from the server,

The notification message is a message generated by the server when the target resource changes.

In an optional implementation mode, the method, after the operation in S802, may further include the following operation.

A modified electronic device between the updated at least one third electronic device and the at least one third electronic device receives a modification notification indicating successful updating for an updating request from the server.

The updating request is a request sent to the server by the first electronic device, and carries information of the updated at least one third electronic device. The information of the updated at least one third electronic device includes an identifier of the updated at least one third electronic device. The modification notification is configured to notify whether the modified electronic device between the updated at least one third electronic device and the at least one third electronic device subscribes to the target resource.

The updating request is configured for the server to add information of at least one fourth electronic device to information of the at least one third electronic device to obtain the information of the updated at least one third electronic device. The at least one fourth electronic device is at least one electronic device in the second electronic device. The modification notification is configured to notify that the at least one fourth electronic device successfully subscribes to the target resource. The information of the at least one third electronic device includes an identifier of the at least one third electronic device. The information of the at least one fourth electronic device includes an identifier of the at least one fourth electronic device.

And/or, the updating request is configured for the server to delete information of a fifth electronic device from the information of the at least one third electronic device to obtain the information of the updated at least one third electronic device. The modification notification is configured to notify that the fifth electronic device cancels subscription to the target resource. The information of the fifth electronic device includes an identifier of the fifth electronic device.

In an optional embodiment, the operation in S802 may include the following operation.

The target resource, server, and first electronic device which are carried in the subscription notification indicating successful subscription to the target resource are stored in a created monitoring resource, to establish the receiving mechanism for the target resource.

In an optional embodiment, the operation in S802 may include the following operation.

The target resource, server, first electronic device, and at least one third electronic device which are carried in the subscription notification indicating successful subscription to the target resource are stored in a created monitoring resource, to establish the receiving mechanism for the target resource.

In an optional implementation mode, the method, after the operation in S802, may include the following operations.

The at least one third electronic device sends an updating request for information of the at least one third electronic device to the server. The updating request contains information of an updated at least one third electronic device. The information of the at least one third electronic device includes an identifier of the at least one third electronic device. The information of the updated at least one third electronic device includes an identifier of the updated at least one third electronic device.

A modified electronic device between the updated at least one third electronic device and the at least one third electronic device receives a modification notification indicating successful updating for the updating request from the server. The modification notification is configured to notify whether the modified electronic device between the updated at least one third electronic device and the at least one third electronic device subscribes to the target resource.

Based on the same inventive concept of the abovementioned embodiments, an embodiment of the application provides an electronic device, which is the same as the first electronic device in one or more abovementioned embodiments.

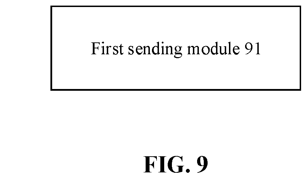

Every two of the electronic device, a server, and a second electronic device are in communication connection. FIG. 9 is a structure diagram of an optional first kind of electronic device according to an embodiment of the disclosure. As illustrated in FIG. 9, the electronic device includes a first sending module 91.

The first sending module 91 is configured to send a resource subscription request to the server.

The resource subscription request is configured to indicate a target resource requested for subscription in the server, and is further configured to indicate at least one third electronic device that the server is required to notify when the target resource changes. The at least one third electronic device is at least one electronic device in the second electronic device.

In an optional implementation mode, the electronic device may further include a first receiving module.

The first receiving module is configured to receive a response message indicating successful subscription to the target resource from the server after the resource subscription request is sent to the server.

In an optional implementation mode, the first receiving module is further configured to:
receive a notification message about the target resource from the server when the target resource changes,

The notification message is a message generated by the server when the target resource changes.

In an optional implementation mode, the first sending module 91 is further configured to:

send an updating request for information of the at least one third electronic device to the server after the response message indicating successful subscription to the target resource is received. The information of the at least one third electronic device includes an identifier of the at least one third electronic device. The updating request carries information of updated at least one third electronic device. The information of the updated at least one third electronic device includes an identifier of the updated at least one third electronic device.

The first receiving module is further configured to receive a response message indicating successful updating for the updating request from the server.

The updating request is configured for the server to add information of at least one fourth electronic device to the information of the at least one third electronic device to obtain the information of the updated at least one third electronic device. The at least one fourth electronic device is at least one electronic device in the second electronic device. The information of the at least one fourth electronic device includes an identifier of the at least one fourth electronic device.

And/or, the updating request is configured for the server to delete information of a fifth electronic device from the information of the at least one third electronic device to obtain the information of the updated at least one third electronic device. The information of the fifth electronic device includes an identifier of the fifth electronic device.

In practical applications, the first sending module 91 and the first receiving module may be implemented by a processor located in the electronic device, specifically by a Central Processing Unit (CPU), a Microprocessor Unit (MPU), a Digital Signal Processing (DSP), a Field Programmable Gate Array (FPGA), or the like.

An embodiment of the application provides a server, which is the same the server in one or more abovementioned embodiments.

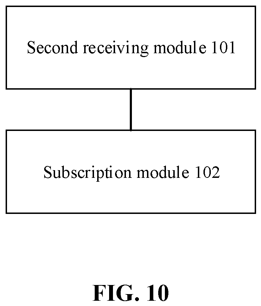

Every two of the server, a first electronic device, and a second electronic device are in communication connection. FIG. 10 is a structure diagram of an optional server according to an embodiment of the application. As illustrated in FIG. 10, the server includes a second receiving module 101 and a subscription module 102.

The second receiving module 101 is configured to receive a resource subscription request from the first electronic device.

The resource subscription request is configured to indicate a target resource requested for subscription by the first electronic device, and is further configured to indicate at least one third electronic device required by the first electronic device to be notified when the target resource changes. The at least one third electronic device is at least one electronic device in the second electronic device.

The subscription module 102 is configured to perform subscription to a target resource for the first electronic device and the at least one third electronic device according to the resource subscription request.

In an optional implementation mode, the server may further include a generation module.

The generation module is configured to, after subscription to the target resource is performed for the first electronic device and the at least one third electronic device according to the resource subscription request, generate a response message indicating successful subscription to the target resource and a subscription notification indicating successful subscription to the target resource, send the response message indicating successful subscription to the target resource to the first electronic device, and send the subscription notification to the at least one third electronic device.

In an optional implementation mode, the server may further include a notification module.

The notification module is configured to, after the response message indicating successful subscription to the target resource and the subscription notification indicating successful subscription to the target resource are generated, the response message indicating successful subscription to the target resource is sent to the first electronic device, and the subscription notification is sent to the at least one third electronic device, when the target resource changes, generate a notification message that the target resource changes and send the notification message to the first electronic device and the at least one third electronic device.

In an optional implementation mode, the server may further include a modification module.

The modification module is configured to:
after the response message indicating successful subscription to the target resource and the subscription notification indicating successful subscription to the target resource are generated, the response message indicating successful subscription is sent to the target resource to the first electronic device, and the subscription notification is sent to the at least one third electronic device, receive an updating request for information of the at least one third electronic device. The information of the at least one third electronic device includES an identifier of the at least one third electronic device. The updating request carries information of updated at least one third electronic device, and the information of the updated at least one third electronic device includes an identifier of the updated at least one third electronic device;
update the information of the at least one third electronic device according to the information of the updated at least one third electronic device; and
generate a response message indicating successful updating for the updating request and a modification notification indicating successful updating for the updating request, send the response message indicating successful updating for the updating request to the first electronic device, and send the modification notification to a modified electronic device between the updated at least one third electronic device and the at least one third electronic device.

The modification notification is configured to notify whether a modified electronic device between the updated at least one third electronic device and the at least one third electronic device subscribes to the target resource.

In an optional embodiment, the operation that modification module updates the information of the at least one third electronic device according to the information of the updated at least one third electronic device includes:
adding information of at least one fourth electronic device is to the information of the at least one third electronic device to obtain the information of the updated at least one third electronic device, the at least one fourth electronic device being at least one electronic device in the second electronic device, and the information of the at least one fourth electronic device including an identifier of the at least one fourth electronic device; and/or
deleting information of a fifth electronic device from the information of the at least one third electronic device to obtain the information of the updated at least one third electronic device, the information of the fifth electronic device including an identifier of the fifth electronic device.

In an optional implementation mode, the subscription module 102 is specifically configured to:
store the target resource, the first electronic device, and the at least one third electronic device in a created monitoring resource, and monitor the target resource to subscribe to the target resource for the first electronic device and the at least one third electronic device.

In an optional implementation mode, the server may further include a counting cancellation module.

The counting cancellation module is configured to:
count the number of times that the notification message has been sent and the number of times that a response message indicating successful reception of the notification message is received from each electronic device in the at least one third electronic device;
calculate a difference value between the number of times that the notification message has been sent and the number of times received from each electronic device in the at least one third electronic device that the notification message is successfully received; and
determine an electronic device corresponding to a difference value greater than or equal to a preset threshold as an electronic device specified to be modified, delete information of the electronic device specified to be modified from information of the at least one third electronic device, and notify the electronic device specified to be modified to cancel subscription to the target resource. The information of the at least one third electronic device includes an identifier of the at least one third electronic device. The information of the electronic device specified to be modified includes an identifier of the electronic device specified to be modified.

In practical applications, the second receiving module 101, the subscription module 102, the generation module, the notification module, the modification module, and the counting cancellation module may be implemented by a processor in the server, specifically by a CPU, an MPU, a DSP, an FPGA, or the like.

An embodiment of the application provides an electronic device, which is the same the at least one third electronic device in one or more abovementioned embodiments.

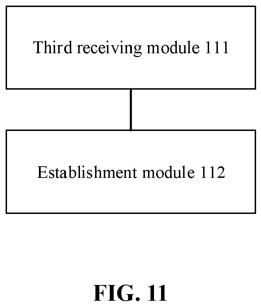

Every two of a server, a first electronic device, and a second electronic device are in communication connection. The electronic device is at least one electronic device in the second electronic device. FIG. 11 is a structure diagram of an optional second kind of electronic device according to an embodiment of the application. As illustrated in FIG. 11, the electronic device includes a third receiving module 111 and an establishment module 112.

The third receiving module 111 is configured to receive a subscription notification which is generated by the server and indicates successful subscription to a target resource.

The target resource is a resource indicated in a resource subscription request and requested for subscription in the server by the first electronic device. The resource subscription request is a request received by the server from the first electronic device, and is further configured to indicate the at least one electronic device that the first electronic device requires the server to notify when the target resource changes.

The establishment module 112 is configured to establish a receiving mechanism for the target resource according to the subscription notification indicating successful subscription to the target resource.

The receiving mechanism is configured to receive a message when the target resource changes.

In an optional implementation mode, the third receiving module 111 is further configured to:
receive a notification message about the target resource from the server when the target resource changes,

The notification message is a message generated by the server when the target resource changes.

In an optional implementation mode, the third receiving module 111 is further configured to:
receive, by a modified electronic device between updated at least one electronic device and the at least one electronic device, a modification notification indicating successful updating for an updating request from the server after the receiving mechanism for the target resource is established according to the subscription notification indicating successful subscription to the target resource.

The updating request is a request sent to the server by the first electronic device, and carries information of the updated at least one electronic device. The information of the updated at least one electronic device includes an identifier of the updated at least one electronic device. The modification notification is configured to notify whether the modified electronic device between the updated at least one electronic device and the at least one electronic device subscribes to the target resource.

The updating request is configured for the server to add information of at least one fourth electronic device to information of the at least one electronic device to obtain the information of the updated at least one electronic device. The at least one fourth electronic device is at least one electronic device in the second electronic device. The modification notification is configured to notify that the at least one fourth electronic device successfully subscribes to the target resource. The information of the at least one electronic device includes an identifier of the at least one electronic device. The information of the at least one fourth electronic device includes an identifier of the at least one fourth electronic device.

And/or, the updating request is configured for the server to delete information of a fifth electronic device from the information of the at least one electronic device to obtain the information of the updated at least one electronic device. The modification notification is configured to notify that the fifth electronic device cancels subscription to the target resource. The information of the fifth electronic device includes an identifier of the fifth electronic device.

In an optional implementation mode, the establishment module 112 is specifically configured to:
store the target resource, server, and first electronic device, which are carried in the subscription notification indicating successful subscription to the target resource, in a created monitoring resource, to establish the receiving mechanism for the target resource.

In an optional implementation mode, the establishment module 112 is specifically configured to:
store the target resource, server, first electronic device, and at least one electronic device, which are carried in the subscription notification indicating successful subscription to the target resource, in a created monitoring resource, to establish the receiving mechanism for the target resource.

In an optional implementation mode, the electronic device further includes a second sending module.

The second sending module is configured to send, by the at least one electronic device, an updating request for information of the at least one electronic device to the server after the receiving mechanism for the target resource is established according to the subscription notification indicating successful subscription to the target resource. The updating request carries information of updated at least one electronic device. The information of the at least one electronic device includes an identifier of the at least one electronic device. The information of the updated at least one electronic device includes an identifier of the updated at least one electronic device.

The modified electronic device between the updated at least one electronic device and the at least one electronic device is further configured to:
receive a modification notification indicating successful updating for the updating request from the server, the modification notification being configured to notify whether the modified electronic device between the updated at least one electronic device and the at least one electronic device subscribes to the target resource.

In practical applications, the third receiving module 111, the establishment module 112, and the second sending module may be implemented by a processor in the electronic device, specifically by a CPU, an MPU, a DSP, an FPGA, or the like.

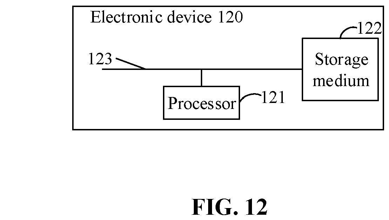

FIG. 12 is a structure diagram of another optional first kind of electronic device according to an embodiment of the application. As illustrated in FIG. 12, an embodiment of the application provides an electronic device 120. Every two of the electronic device 120, a server, and a second electronic device are in communication connection. The electronic device 120 includes:
a processor 121 and a storage medium 122 storing instructions executable for the processor. The storage medium 122 executes operations dependently on the processor 121 through a communication bus 123. The instructions are executed by the processor 121 to execute the resource subscription method executed by the first electronic device.

It is to be noted that, in practical applications, each component in the electronic device 120 is coupled together through the communication bus 123. It can be understood that the communication bus 123 is configured to implement connection communication between these components. The communication bus 123 includes a data bus, and further includes a power bus, a control bus, and a state signal bus. However, for clear description, various buses in FIG. 12 are marked as the communication bus 123.

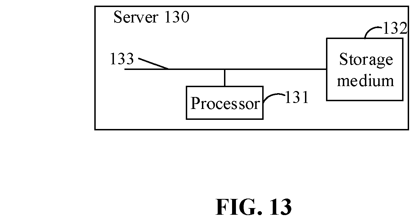

FIG. 13 is a structure diagram of another optional server according to an embodiment of the application. As illustrated in FIG. 13, an embodiment of the application provides a server 130. Every two of the server 130, a first electronic device, and a second electronic device are in communication connection. The server 130 may include:
a processor 131 and a storage medium 132 storing instructions executable for the processor. The storage medium 132 executes operations dependently on the processor 131 through a communication bus 133. The instructions are executed by the processor 131 to execute the resource subscription method executed by the server.

It is to be noted that, in practical applications, each component in the server 130 is coupled together through the communication bus 133. It can be understood that the communication bus 133 is configured to implement connection communication between these components. The communication bus 133 includes a data bus, and further includes a power bus, a control bus, and a state signal bus. However, for clear description, various buses in FIG. 13 are marked as the communication bus 133.

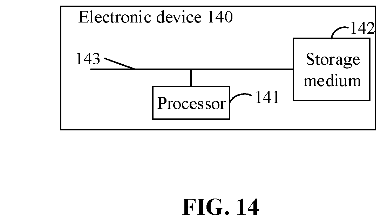

FIG. 14 is a structure diagram of another optional second kind of electronic device according to an embodiment of the application. As illustrated in FIG. 14, an embodiment of the application provides an electronic device 140. Every two of a server, a first electronic device, and a second electronic device are in communication connection. The electronic device 140 is at least one electronic device in the second electronic device. The electronic device 140 includes:
a processor 141 and a storage medium 142 storing instructions executable for the processor. The storage medium 142 executes operations dependently on the processor 141 through a communication bus 143. The instructions are executed by the processor 141 to execute the resource subscription method executed by the at least one third electronic device.

It is to be noted that, in practical applications, each component in the third electronic device 140 is coupled together through the communication bus 143. It can be understood that the communication bus 143 is configured to implement connection communication between these components. The communication bus 143 includes a data bus, and further includes a power bus, a control bus, and a state signal bus. However, for clear description, various buses in FIG. 14 are marked as the communication bus 143.

An embodiment of the application provides a computer storage medium storing executable instructions which are executed by one or more processors to enable the one or more processors to execute the resource subscription method executed by the first electronic device, or the server, or the at least one third electronic device.

An embodiment of the application provides a chip, which includes a processor, which is configured to call and run a computer program in a memory to enable a device installed with the chip to execute the resource subscription method executed by the first electronic device, or the server, or the at least one third electronic device.

An embodiment of the application provides a computer program, which enables a computer to execute the resource subscription method executed by the first electronic device, or the server, or the at least one third electronic device.

An embodiment of the application provides a computer program product including computer program instructions which enable a computer to execute the resource subscription method executed by the first electronic device, or the server, or the at least one third electronic device.

It is to be noted that the computer-readable storage medium may be a memory such as a Ferromagnetic Random Access Memory (FRAM), a Read Only Memory (ROM), a Programmable Read-Only Memory (PROM), an Erasable Programmable Read-Only Memory (EPROM), an Electrically Erasable Programmable Read-Only Memory (EEPROM), a flash memory, a magnetic surface memory, an optical disk, or a Compact Disc Read-Only Memory (CD-ROM),

Those skilled in the art should know that the embodiment of the application may be provided as a method, a system or a computer program product. Therefore, the application may adopt a form of hardware embodiment, software embodiment or combined software and hardware embodiment. Moreover, the application may adopt a form of computer program product implemented on one or more computer-available storage media (including, but not limited to, a disk memory, an optical memory and the like) including computer-available program codes.

The application is described with reference to flowcharts and/or block diagrams of the method, device (system), and computer program product according to the embodiments of the application. It is to be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of another programmable data processing device to generate a machine, so that a device for realizing a function specified in one flow or multiple flows in the flowcharts and/or one block or multiple blocks in the block diagrams is generated by the instructions executed through the computer or the processor of the other programmable data processing device.

These computer program instructions may also be stored in a computer-readable memory capable of guiding the computer or the other programmable data processing device to work in a specific manner, so that a product including an instruction device may be generated by the instructions stored in the computer-readable memory, the instruction device realizing the function specified in one flow or multiple flows in the flowcharts and/or one block or multiple blocks in the block diagrams.

These computer program instructions may further be loaded onto the computer or the other programmable data processing device, so that a series of operating steps are executed on the computer or the other programmable data processing device to generate processing implemented by the computer, and steps for realizing the function specified in one flow or multiple flows in the flowcharts and/or one block or multiple blocks in the block diagrams are provided by the instructions executed on the computer or the other programmable data processing device.

The above is only the preferred embodiment of the application and not intended to limit the scope of protection of the application.

### INDUSTRIAL APPLICABILITY

In the embodiments of the application, the first electronic device sends the resource subscription request to the server. The resource subscription request is configured to indicate the target resource requested for subscription in the server, and is further configured to indicate the at least one third electronic device that the server is required to notify when the target resource changes. The at least one third electronic device is at least one electronic device in the second electronic device. Through the resource subscription method, resource subscription is not limited to one-to-one resource subscription, the realizing range of resource subscription is extended, and a user is helped to use a resource subscription function conveniently and rapidly, thereby improving user experiences.

## Claims

1. A resource subscription method, applied to a first electronic device, every two of the first electronic device, a server, and a second electronic device being in communication connection, the method comprising:
sending a resource subscription request to the server,
wherein the resource subscription request is configured to indicate a target resource requested for subscription in the server, and is further configured to indicate at least one third electronic device that the server is required to notify when the target resource changes, and the at least one third electronic device is at least one electronic device in the second electronic device.

2. The method of claim 1, after sending the resource subscription request to the server, further comprising:
receiving a response message indicating successful subscription to the target resource from the server.

3. The method of claim 2, when the target resource changes, further comprising:
receiving a notification message about the target resource from the server,
wherein the notification message is a message generated by the server when the target resource changes.

4. The method of claim 2, after receiving the response message indicating successful subscription to the target resource, further comprising:
sending an updating request for information of the at least one third electronic device to the server, wherein the information of the at least one third electronic device comprises an identifier of the at least one third electronic device, the updating request carries information of updated at least one third electronic device, and the information of the updated at least one third electronic device comprises an identifier of the updated at least one third electronic device; and
receiving a response message indicating successful updating for the updating request from the server.

5. The method of claim 4, wherein
the updating request is configured for the server to add information of at least one fourth electronic device to the information of the at least one third electronic device to obtain the information of the updated at least one third electronic device, wherein the at least one fourth electronic device is at least one electronic device in the second electronic device, and the information of the at least one fourth electronic device comprises an identifier of the at least one fourth electronic device; and/or
the updating request is configured for the server to delete information of a fifth electronic device from the information of the at least one third electronic device to obtain the information of the updated at least one third electronic device, wherein the information of the fifth electronic device comprises an identifier of the fifth electronic device.

6. A resource subscription method, applied to a server, every two of the server, a first electronic device, and a second electronic device being in communication connection, the method comprising:
receiving a resource subscription request from the first electronic device,
wherein the resource subscription request is configured to indicate a target resource requested for subscription by the first electronic device, and is further configured to indicate at least one third electronic device required by the first electronic device to be notified when the target resource changes, and the at least one third electronic device is at least one electronic device in the second electronic device; and
performing subscription to the target resource for the first electronic device and the at least one third electronic device according to the resource subscription request.

7. The method of claim 6, after performing subscription to the target resource for the first electronic device and the at least one third electronic device according to the resource subscription request, further comprising:
generating a response message indicating successful subscription to the target resource and a subscription notification indicating successful subscription to the target resource, sending the response message indicating successful subscription to the target resource to the first electronic device, and sending the subscription notification to the at least one third electronic device.

8. The method of claim 7, after generating the response message indicating successful subscription to the target resource and the subscription notification indicating successful subscription to the target resource, sending the response message indicating successful subscription to the target resource to the first electronic device, and sending the subscription notification to the at least one third electronic device, further comprising:
when the target resource changes, generating a notification message that the target resource changes, and sending the notification message to the first electronic device and the at least one third electronic device.

9. The method of claim 7, after generating the response message indicating successful subscription to the target resource and the subscription notification indicating successful subscription to the target resource, sending the response message indicating successful subscription to the target resource to the first electronic device, and sending the subscription notification to the at least one third electronic device, further comprising:
receiving an updating request for information of the at least one third electronic device, wherein the information of the at least one third electronic device comprises an identifier of the at least one third electronic device, the updating request carries information of updated at least one third electronic device, and the information of the updated at least one third electronic device comprises an identifier of the updated at least one third electronic device;
updating the information of the at least one third electronic device according to the information of the updated at least one third electronic device; and
generating a response message indicating successful updating for the updating request and a modification notification indicating successful updating for the updating request, sending the response message indicating successful updating for the updating request to the first electronic device, and sending the modification notification to a modified electronic device between the updated at least one third electronic device and the at least one third electronic device,
wherein the modification notification is configured to notify whether the modified electronic device between the updated at least one third electronic device and the at least one third electronic device subscribes to the target resource.

10. The method of claim 9, wherein
updating the information of the at least one third electronic device according to the information of the updated at least one third electronic device comprises:
adding information of at least one fourth electronic device to the information of the at least one third electronic device to obtain the information of the updated at least one third electronic device, wherein the at least one fourth electronic device is at least one electronic device in the second electronic device, and the information of the at least one fourth electronic device comprises an identifier of the at least one fourth electronic device; and/or
deleting information of a fifth electronic device from the information of the at least one third electronic device to obtain the information of the updated at least one third electronic device, wherein the information of the fifth electronic device comprises an identifier of the fifth electronic device.

11. The method of claim 6, wherein performing subscription to the target resource for the first electronic device and the at least one third electronic device according to the resource subscription request comprises:
storing the target resource, the first electronic device, and the at least one third electronic device in a created monitoring resource, and monitoring the target resource to subscribe to the target resource for the first electronic device and the at least one third electronic device.

12. The method of claim 8, after generating the notification message that the target resource changes and sending the notification message to the first electronic device and the at least one third electronic device when the target resource changes, further comprising:
counting a number of times that the notification message has been sent and a number of times that a response message indicating successful reception of the notification message is received from each electronic device in the at least one third electronic device;
calculating a difference value between the number of times that the notification message has been sent and the number of times received from each electronic device in the at least one third electronic device that the notification message is successfully received ; and
determining an electronic device corresponding to a difference value greater than or equal to a preset threshold as an electronic device specified to be modified, deleting information of the electronic device specified to be modified from information of the at least one third electronic device, and notifying the electronic device specified to be modified to cancel subscription to the target resource, wherein the information of the at least one third electronic device comprises an identifier of the at least one third electronic device, and the information of the electronic device specified to be modified comprises an identifier of the electronic device specified to be modified.

13. A resource subscription method, applied to at least one third electronic device, every two of a first electronic device, a server, and a second electronic device being in communication connection, and the at least one third electronic device being at least one electronic device in the second electronic device, the method comprising:
receiving a subscription notification which is generated by the server and indicates successful subscription to a target resource,
wherein the target resource is a resource indicated in a resource subscription request and requested for subscription in the server by the first electronic device, and the resource subscription request is a request received by the server from the first electronic device, and the resource subscription request is further configured to indicate the at least one third electronic device that the first electronic device requires the server to notify when the target resource changes; and
establishing a receiving mechanism for the target resource according to the subscription notification indicating successful subscription to the target resource,
wherein the receiving mechanism is configured to receive a message when the target resource changes.

14. The method of claim 13, when the target resource changes, further comprising:
receiving a notification message about the target resource from the server,
wherein the notification message is a message generated by the server when the target resource changes.

15. The method of claim 13, after establishing the receiving mechanism for the target resource according to the subscription notification indicating successful subscription to the target resource, further comprising:
receiving, by a modified electronic device between updated at least one third electronic device and the at least one third electronic device, a modification notification indicating successful updating for an updating request from the server,
wherein the updating request is a request sent to the server by the first electronic device, and carries information of the updated at least one third electronic device, the information of the updated at least one third electronic device comprises an identifier of the updated at least one third electronic device, and the modification notification is configured to notify whether the modified electronic device between the updated at least one third electronic device and the at least one third electronic device subscribes to the target resource.

16. The method of claim 15, wherein
the updating request is configured for the server to add information of at least one fourth electronic device to information of the at least one third electronic device to obtain the information of the updated at least one third electronic device, wherein the at least one fourth electronic device is at least one electronic device in the second electronic device, the modification notification is configured to notify that the at least one fourth electronic device successfully subscribes to the target resource, the information of the at least one third electronic device comprises an identifier of the at least one third electronic device, and the information of the at least one fourth electronic device comprises an identifier of the at least one fourth electronic device; and/or
the updating request is configured for the server to delete information of a fifth electronic device from the information of the at least one third electronic device to obtain the information of the updated at least one third electronic device, the modification notification is configured to notify that the fifth electronic device cancels subscription to the target resource, and the information of the fifth electronic device comprises an identifier of the fifth electronic device.

17. The method of claim 13, wherein establishing the receiving mechanism for the target resource according to the subscription notification indicating successful subscription to the target resource comprises:
storing the target resource, server, and first electronic device, which are carried in the subscription notification indicating successful subscription to the target resource, in a created monitoring resource to establish the receiving mechanism for the target resource.

18. The method of claim 13, wherein establishing the receiving mechanism for the target resource according to the subscription notification indicating successful subscription to the target resource comprises:
storing the target resource, server, first electronic device, and at least one third electronic device, which are carried in the subscription notification indicating successful subscription to the target resource, in a created monitoring resource to establish the receiving mechanism for the target resource.

19. The method of claim 13, after establishing the receiving mechanism for the target resource according to the subscription notification indicating successful subscription to the target resource, further comprising:
sending an updating request for information of the at least one third electronic device to the server, wherein the updating request carries information of updated at least one third electronic device, the information of the at least one third electronic device comprises an identifier of the at least one third electronic device, and the information of the updated at least one third electronic device comprises an identifier of the updated at least one third electronic device; and
receiving, by a modified electronic device between the updated at least one third electronic device and the at least one third electronic device, a modification notification indicating successful updating for the updating request from the server, wherein the modification notification is configured to notify whether the modified electronic device between the updated at least one third electronic device and the at least one third electronic device subscribes to the target resource.

20. An electronic device, every two of the electronic device, a server, and a second electronic device being in communication connection, the electronic device comprising:
a first sending module, configured to send a resource subscription request to the server,
wherein the resource subscription request is configured to indicate a target resource requested for subscription in the server, and is further configured to indicate at least one third electronic device that the server is required to notify when the target resource changes, and the at least one third electronic device is at least one electronic device in the second electronic device.

21. The electronic device of claim 20, further comprising:
a first receiving module, configured to receive a response message indicating successful subscription to the target resource from the server after the resource subscription request is sent to the server.

22. The electronic device of claim 21, wherein the first receiving module is further configured to:
receive a notification message about the target resource from the server when the target resource changes,
wherein the notification message is a message generated by the server when the target resource changes.

23. The electronic device of claim 21, wherein the first sending module is further configured to:
send an updating request for information of the at least one third electronic device to the server after the response message indicating successful subscription to the target resource is received, wherein the information of the at least one third electronic device comprises an identifier of the at least one third electronic device, the updating request carries information of updated at least one third electronic device, and the information of the updated at least one third electronic device comprises an identifier of the updated at least one third electronic device; and
the first receiving module is further configured to receive a response message indicating successful updating for the updating request from the server.

24. The electronic device of claim 23, wherein
the updating request is configured for the server to add information of at least one fourth electronic device to the information of the at least one third electronic device to obtain the information of the updated at least one third electronic device, wherein the at least one fourth electronic device is at least one electronic device in the second electronic device, and the information of the at least one fourth electronic device comprises an identifier of the at least one fourth electronic device; and/or
the updating request is configured for the server to delete information of a fifth electronic device from the information of the at least one third electronic device to obtain the information of the updated at least one third electronic device, wherein the information of the fifth electronic device comprises an identifier of the fifth electronic device.

25. A server, every two of the server, a first electronic device, and a second electronic device being in communication connection, the server comprising:
a second receiving module, configured to receive a resource subscription request from the first electronic device,
wherein the resource subscription request is configured to indicate a target resource requested for subscription by the first electronic device, and is further configured to indicate at least one third electronic device required by the first electronic device to be notified when the target resource changes, and the at least one third electronic device is at least one electronic device in the second electronic device; and
a subscription module, configured to perform subscription to the target resource for the first electronic device and the at least one third electronic device according to the resource subscription request.

26. The server of claim 25, further comprising:
a generation module, configured to, after subscription to the target resource is performed for the first electronic device and the at least one third electronic device according to the resource subscription request, generate a response message indicating successful subscription to the target resource and a subscription notification indicating successful subscription to the target resource, send the response message indicating successful subscription to the target resource to the first electronic device, and send the subscription notification to the at least one third electronic device.

27. The server of claim 26, further comprising:
a notification module, configured to, after the response message indicating successful subscription to the target resource and the subscription notification indicating successful subscription to the target resource are generated, the response message indicating successful subscription to the target resource is sent to the first electronic device, and the subscription notification is sent to the at least one third electronic device, when the target resource changes, generate a notification message that the target resource changes and send the notification message to the first electronic device and the at least one third electronic device.

28. The server of claim 26, further comprising:
a modification module, configured to:
after the response message indicating successful subscription to the target resource and the subscription notification indicating successful subscription to the target resource are generated, the response message indicating successful subscription is sent to the target resource to the first electronic device, and the subscription notification is sent to the at least one third electronic device, receive an updating request for information of the at least one third electronic device, wherein the information of the at least one third electronic device comprises an identifier of the at least one third electronic device, the updating request carries information of updated at least one third electronic device, and the information of the updated at least one third electronic device comprises an identifier of the updated at least one third electronic device;
update the information of the at least one third electronic device according to the information of the updated at least one third electronic device; and
generate a response message indicating successful updating for the updating request and a modification notification indicating successful updating for the updating request, send the response message indicating successful updating for the updating request to the first electronic device, and send the modification notification to a modified electronic device between the updated at least one third electronic device and the at least one third electronic device,
wherein the modification notification is configured to notify whether the modified electronic device between the updated at least one third electronic device and the at least one third electronic device subscribes to the target resource.

29. The server of claim 28, wherein the operation that the modification module updates the information of the at least one third electronic device according to the information of the updated at least one third electronic device comprises:
adding information of at least one fourth electronic device to the information of the at least one third electronic device to obtain the information of the updated at least one third electronic device, wherein the at least one fourth electronic device is at least one electronic device in the second electronic device, and the information of the at least one fourth electronic device comprises an identifier of the at least one fourth electronic device; and/or
deleting information of a fifth electronic device from the information of the at least one third electronic device to obtain the information of the updated at least one third electronic device, wherein the information of the fifth electronic device comprises an identifier of the fifth electronic device.

30. The server of claim 25, wherein the subscription module is specifically configured to:
store the target resource, the first electronic device, and the at least one third electronic device in a created monitoring resource, and monitor the target resource to subscribe to the target resource for the first electronic device and the at least one third electronic device.

31. The server of claim 27, further comprising:
a counting cancellation module, configured to:
after the notification message that the target resource changes is generated and the notification message is sent to the first electronic device and the at least one third electronic device when the target resource changes, count a number of times that the notification message has been sent and a number of times that a response message indicating successful reception of the notification message is received from each electronic device in the at least one third electronic device;
calculate a difference value between the number of times that the notification message has been sent and the number of times received from each electronic device in the at least one third electronic device that the notification message is successfully received; and
determine an electronic device corresponding to a difference value greater than or equal to a preset threshold as an electronic device specified to be modified, delete information of the electronic device specified to be modified from information of the at least one third electronic device, and notify the electronic device specified to be modified to cancel subscription to the target resource, wherein the information of the at least one third electronic device comprises an identifier of the at least one third electronic device, and the information of the electronic device specified to be modified comprises an identifier of the electronic device specified to be modified.

32. An electronic device, every two of a server, a first electronic device, and a second electronic device being in communication connection, and the electronic device being at least one electronic device in the second electronic device, the electronic device comprising:
a third receiving module, configured to receive a subscription notification which is generated by the server and indicates successful subscription to a target resource,
wherein the target resource is a resource indicated in a resource subscription request and requested for subscription in the server by the first electronic device, and the resource subscription request is a request received by the server from the first electronic device, and is further configured to indicate the at least one electronic device that the first electronic device requires the server to notify when the target resource changes; and
an establishment module, configured to establish a receiving mechanism for the target resource according to the subscription notification indicating successful subscription to the target resource,
wherein the receiving mechanism is configured to receive a message when the target resource changes.

33. The electronic device of claim 32, wherein the third receiving module is further configured to:
receive a notification message about the target resource from the server when the target resource changes,
wherein the notification message is a message generated by the server when the target resource changes.

34. The electronic device of claim 32, wherein a modified electronic device between updated at least one electronic device and the at least one electronic device is further configured to:
receive a modification notification indicating successful updating for an updating request from the server after the receiving mechanism for the target resource is established according to the subscription notification indicating successful subscription to the target resource,
wherein the updating request is a request sent to the server by the first electronic device, and carries information of the updated at least one electronic device, the information of the updated at least one electronic device comprises an identifier of the updated at least one electronic device, and the modification notification is configured to notify whether the modified electronic device between the updated at least one electronic device and the at least one electronic device subscribes to the target resource.

35. The electronic device of claim 34, wherein
the updating request is configured for the server to add information of at least one fourth electronic device to information of the at least one electronic device to obtain the information of the updated at least one electronic device, wherein the at least one fourth electronic device is at least one electronic device in the second electronic device, the modification notification is configured to notify that the at least one fourth electronic device successfully subscribes to the target resource, the information of the at least one electronic device comprises an identifier of the at least one electronic device, and the information of the at least one fourth electronic device comprises an identifier of the at least one fourth electronic device; and/or
the updating request is configured for the server to delete information of a fifth electronic device from the information of the at least one electronic device to obtain the information of the updated at least one electronic device, the modification notification is configured to notify that the fifth electronic device cancels subscription to the target resource, and the information of the fifth electronic device comprises an identifier of the fifth electronic device.

36. The electronic device of claim 32, wherein the establishment module is specifically configured to:
store the target resource, server, and first electronic device, which are carried in the subscription notification indicating successful subscription to the target resource, in a created monitoring resource to establish the receiving mechanism for the target resource.

37. The electronic device of claim 32, wherein the establishment module is specifically configured to:
store the target resource, server, first electronic device, and at least one electronic device, which are carried in the subscription notification indicating successful subscription to the target resource, in a created monitoring resource to establish the receiving mechanism for the target resource.

38. The electronic device of claim 32, further comprising:
a second sending module, configured to send an updating request for information of the at least one electronic device to the server after the receiving mechanism for the target resource is established according to the subscription notification indicating successful subscription to the target resource, wherein the updating request carries information of updated at least one electronic device, the information of the at least one electronic device comprises an identifier of the at least one electronic device, and the information of the updated at least one electronic device comprises an identifier of the updated at least one electronic device,
wherein the modified electronic device between the updated at least one electronic device and the at least one electronic device is further configured to:
receive a modification notification indicating successful updating for the updating request from the server, wherein the modification notification is configured to notify whether the modified electronic device between the updated at least one electronic device and the at least one electronic device subscribes to the target resource.

39. An electronic device, every two of the electronic device, a server, and a second electronic device being in communication connection, the electronic device comprising:
a processor and a storage medium storing instructions executable for the processor, wherein the storage medium executes operations dependently on the processor through a communication bus; and the instructions are executed by the processor to execute the resource subscription method of any one of claims 1-5.

40. A server, every two of the server, a first electronic device, and a second electronic device being in communication connection, the server comprising:
a processor and a storage medium storing instructions executable for the processor, wherein the storage medium executes operations dependently on the processor through a communication bus; and the instructions are executed by the processor to execute the resource subscription method of any one of claims 6-12.

41. An electronic device, every two of a server, a first electronic device, and a second electronic device being in communication connection, and the electronic device being at least one electronic device in the second electronic device, the electronic device comprising:
a processor and a storage medium storing instructions executable for the processor, wherein the storage medium executes operations dependently on the processor through a communication bus; and the instructions are executed by the processor to execute the resource subscription method of any one of claims 13-19.

42. A computer-readable storage medium, having stored thereon executable instructions which are executed by one or more processors to enable the one or more processors to execute the resource subscription method of any one of claims 1-5, the resource subscription method of any one of claims 6-12, or the resource subscription method of any one of claims 13-19.

43. A chip, comprising a processor, which is configured to call and run a computer program in a memory to enable a device installed with the chip to execute the method of any one of claims 1-5, or the method of any one of claims 6-12, or the method of any one of claims 13-19.

44. A computer program, enabling a computer to execute the method of any one of claims 1-5, or the method of any one of claims 6-12, or the method of any one of claims 13-19.

45. A computer program product, comprising computer program instructions which enable a computer to execute the method of any one of claims 1-5, or the method of any one of claims 6-12, or the method of any one of claims 13-19.
